# Europäisches Patentamt

## European Patent Office

## Office européen des brevets

(11) Veröffentlichungsnummer: **0 283 818 B1**

(12) **EUROPÄISCHE PATENTSCHRIFT**

(45) Veröffentlichungstag der Patentschrift: **30.12.92**　　(51) Int. Cl.⁵: **B60P 3/32**

(21) Anmeldenummer: **88103510.9**

(22) Anmeldetag: **09.03.88**

(54) **Fahrzeugeinheit, bestehend aus einer Zugeinheit und einer einachsigen lösbar angeschlossenen Anhängereinheit.**

(30) Priorität: **09.03.87 DE 3707544**

(43) Veröffentlichungstag der Anmeldung:
**28.09.88 Patentblatt 88/39**

(45) Bekanntmachung des Hinweises auf die
Patenterteilung:
**30.12.92 Patentblatt 92/53**

(84) Benannte Vertragsstaaten:
**AT BE CH DE ES FR GB IT LI NL SE**

(56) Entgegenhaltungen:
**EP-A- 0 111 855**　　　**DE-A- 2 901 435**
**DE-A- 3 403 801**　　　**DE-A- 3 404 582**
**FR-A- 2 440 307**　　　**FR-A- 2 558 423**
**GB-A- 1 053 482**　　　**GB-A- 2 129 750**

(73) Patentinhaber: **HEKU-BOOTSANHANGER HEL-
MUT KOLLMEIER
Bunzlauer Strasse 6
W-4800 Bielefeld 17(DE)**

(72) Erfinder: **Kollmeier, Helmut
Grasbreede 6
W-Bielefeld 17(DE)**

(74) Vertreter: **Schirmer, Siegfried, Dipl.-Ing.
Patentanwalt Osningstrasse 10
W-4800 Bielefeld 1(DE)**

EP 0 283 818 B1

## Beschreibung

Die Erfindung betrifft eine Fahrzeugeinheit, bestehend aus einer aus einem serienmäßigen Personenkraftwagen gebildeten Zugeinheit und einer einachsigen lösbar angeschlossenen Anhängeeinheit, deren Vorderteil über das Dach der Zugeinheit hochgezogen und darauf abgestützt ist, wobei die Zug- und die Anhängeeinheit im wesentlichen identische Breite und identischen Radabstand aufweisen und die Anhängeeinheit über eine am Rahmenende der Zugeinheit starr angeordnete zug- und druckfeste Verbindungseinrichtung starr anschließbar ist und das Vorderteil der Anhängeeinheit mindestens an zwei Punkten des Dachrahmens abgestützt und starr befestigt ist, wobei der Schwerpunkt der Anhängeeinheit zu dem auf dem Dachrahmen abgestützten Vorderteil verlagert ist.

Aus der FR-A 2 440 307 ist eine Fahrzeugeinheit der aufgezeigten Gattung bekannt. Bei einem Abstand zwischen der Zugeinheit und der Anhängeeinheit < 1.00 m zählt die gesamte Fahrzeugeinheit nicht als dreiachsiges, sondern als zweiachsiges Fahrzeug. Dadurch ist die Möglichkeit gegeben, einen weiteren einachsigen Anhänger anzuhängen. Allerdings sind in der genannten Schrift keine Lösungen aufgezeigt, um einen Höhenausgleich von der Anhängeeinheit zu den verschiedenen Zugeinheiten herstellen zu können.

Der Erfindung liegt daher die Aufgabe zugrunde, eine Fahrzeugeinheit so auszubilden, daß ohne Schwierigkeiten ein Höhenausgleich zu den verschiedensten Zugeinheiten herstellbar ist.

Diese Aufgabe wird erfindungsgemäß dadurch gelöst, daß die Achse der Anhängeeinheit an deren Rahmenfahrgestell höhenverstellbar angeordnet ist. Am Achsrohr der Anhängeeinheit kann eine mit Lochungen versehene Platte angeschweißt sein, an welche der mit äquivalenten Lochungen versehene Rahmen der Anhängeeinheit über Bolzen anschließbar ist. Zweckmäßigerweise sind die Lochungen in der Platte halbkreisförmig verlaufend angeordnet, wobei diese Lochungen nahe der äußeren Begrenzung der Platte angeordnet sein können. Vorteilhafterweise sind am Rahmen der Anhängeeinheit horizontal und vertikal verschiebbare Trägerstützen angeordnet.

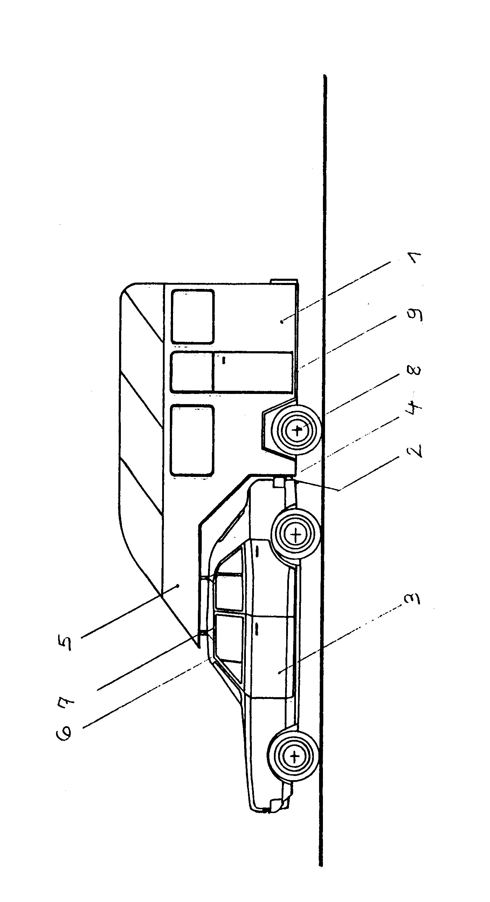

Ein Ausführungsbeispiel der Erfindung ist in der Zeichnung dargestellt und wird nachfolgend näher beschrieben. Die einzige Figur zeigt schematisch in Seitenansicht einen PKW als Zugeinheit mit einer angeschlossenen Anhängeeinheit.

Als Anhängeeinheit 1 ist ein einachsiger Wohnanhänger dargestellt, dessen Vorderteil 5 über das Dach des als Zugeinheit 3 dienenden PKW hochgezogen ist. Dieses hochgezogene Vorderteil 5 stützt sich auf zwei Querträgern 7 ab, die am Dachrahmen 6 der Zugeinheit angebracht sind.

Die Anhängeeinheit 1 ist in einem kleinstmöglichen Abstand über eine zug- und druckfeste Verbindungseinrichtung 4 mit der Zugeinheit 3 lösbar, aber starr verbunden. Die Verbindungseinrichtung 4 ist am Rahmenende 2 der Zugeinheit 3 starr angeschlossen. Um einen Höhenausgleich der Anhängeeinheit 1 zu verschiedenen Zugeinheiten 3 zu erreichen, ist der Abstand zwischen der Achse 8 und dem Rahmen 9 der Anhängeeinheit 1 verstellbar ausgebildet.

Zur Vermeidung eines Luftstaues ist an der Anhängeeinheit eine nicht dargestellte Verblendung angeordnet, die aerodynamisch ausgebildet ist.

Aufstellung der Bezugszeichen:

| | |
|---|---|
| 1 | Anhängeeinheit |
| 2 | Rahmenende von 3 |
| 3 | Zugeinheit |
| 4 | Verbindungseinrichtung |
| 5 | Vorderteil |
| 6 | Dachrahmen |
| 7 | Querträger |
| 8 | Achse von 1 |
| 9 | Rahmen von 1 |

## Patentansprüche

1. Fahrzeugeinheit, bestehend aus einer aus einem serienmäßigen Personenkraftwagen gebildeten Zugeinheit (3) und einer einachsigen lösbar angeschlossenen Anhängeeinheit (1), deren Vorderteil (5) über das Dach der Zugeinheit (3) hochgezogen und darauf abgestützt ist, wobei die Zug- (3) und die Anhängeeinheit (1) im wesentlichen identische Breite und identischen Radabstand aufweisen und die Anhängeeinheit (1) über eine am Rahmenende (2) der Zugeinheit (3) starr angeordnete zug- und druckfeste Verbindungseinrichtung (4) starr anschließbar ist und das Vorderteil (5) der Anhängeeinheit (1) mindestens an zwei Punkten des Dachrahmens (6) abgestützt und starr befestigt ist, wobei der Schwerpunkt der Anhängeeinheit (1) zu dem auf dem Dachrahmen (6) abgestützten Vorderteil (5) verlagert ist, dadurch gekennzeichnet, daß die Achse (8) der Anhängeeinheit (1) an deren Rahmenfahrgestell höhenverstellbar angeordnet ist.

2. Fahrzeugeinheit nach Anspruch 1, dadurch gekennzeichnet, daß am Achsrohr der Anhängeeinheit (1) eine mit Lochungen versehene Platte angeschweißt ist, an welche der mit äquivalenten Lochungen versehene Rahmen (9) der Anhängeeinheit (1) über Bolzen anschließbar ist.

3. Fahrzeugeinheit nach Anspruch 1 oder 2, dadurch gekennzeichnet, daß die Lochungen in der Platte halbkreisförmig verlaufend angeordnet sind.

4. Fahrzeugeinheit nach einem der Ansprüche 1 bis 3, dadurch gekennzeichnet, daß die Lochungen nahe der äußeren Begrenzung der Platte angeordnet sind.

5. Fahrzeugeinheit nach einem der Ansprüche 1 bis 4, dadurch gekennzeichnet, daß am Rahmen (9) der Anhängeeinheit (1) horizontal und vertikal verschiebbare Trägerstützen angeordnet sind.

## Claims

1. Vehicle unit, consisting of a towing unit (3) formed by a series production passenger car and a single-axle, detachably coupled trailer unit (1), the front part (5) of which is drawn up over the roof of the towing unit (3) and supported thereon, wherein the towing unit (3) and the trailer unit (1) have substantially identical width and identical wheel track and the trailer unit (1) can be rigidly coupled by way of a tension and compression resistant connecting device (4) rigidly arranged at the chassis end (2) of the towing unit (3) and the front part (5) of the trailer unit (1) is supported and rigidly fastened at at least two points of the roof frame (6), wherein the centre of gravity of the trailer unit (1) is displaced towards the front part (5) supported on the roof frame (6), characterised thereby that the axle (8) of the trailer unit (1) is arranged to be adjustable in height at the chassis frame thereof.

2. Vehicle unit according to claim 1, characterised thereby that welded to the axle tube of the trailer unit (1) is a plate which is provided with holes and to which the chassis (9), which is provided with equivalent holes, of the trailer unit (1) is connectible by way of bolts.

3. Vehicle unit according to claim 1 or 2, characterised thereby that the holes in the plate are arranged to extend semicircularly.

4. Vehicle unit according to one of claims 1 to 3, characterised thereby that the holes are arranged near the outer boundary of the plate.

5. Vehicle unit according to one of claims 1 to 4, characterised thereby that horizontally and vertically displaceable bearer struts are arranged at the chassis (9) of the trailer unit (1).

## Revendications

1. Unité de véhicule constituée d'une unité de traction (3) formée d'un véhicule automobile de série et d'une unité de remorque (1) mono-essieu fixée de manière amovible dont la partie antérieure (5) s'avance au-dessus du toit de l'unité de traction (3) et s'y appuie, l'unité de traction (3) et l'unité de remorque (1) possédant essentiellement la même largeur et le même écartement de roues, et l'unité de remorque (1) pouvant être fixée par un dispositif de liaison (4) résistant à la traction et à la compression disposé rigidement à l'extrémité du châssis (2) de l'unité de traction (4) et la partie antérieure (5) de l'unité de remorque (1) s'appuyant et étant fixée en deux points du cadre du toit (6), le centre de gravité de l'unité de remorque (1) étant déplacé vers la partie antérieure (5) appuyée sur le cadre du toit, unité de véhicule caractérisée en ce que l'essieu (8) de l'unité de remorque (1) est disposé sur le châssis de façon à être réglable en hauteur.

2. Unité de véhicule selon la revendication 1, caractérisée en ce que le tube d'essieu de l'unité de remorque (1) est soudé sur une plaque munie de trous sur laquelle on peut fixer le châssis (9) de l'unité de remorque (1) muni de trous équivalents au moyen de boulons.

3. Unité de véhicule selon la revendication 1 ou 2, caractérisé en ce que les trous de la plaque sont disposés en demi cercle.

4. Unité de véhicule selon l'une des revendications 1 à 3, caractérisé en ce que les trous sont disposés à proximité de la limite externe de la plaque.

5. Unité de véhicule selon l'une des revendications 1 à 4, caractérisé en ce que des supports pouvant coulisser verticalement et horizontalement sont disposés sur le cadre (9) de l'unité de remorque (1).